# EUROPÄISCHE PATENTSCHRIFT

(11) **EP 2 000 439 B1**
(45) Veröffentlichungstag und Bekanntmachung des Hinweises auf die Patenterteilung: **28.12.2011**
(21) Anmeldenummer: 07109763.8
(22) Anmeldetag: 06.06.2007
(51) Int. Cl.: C01G 49/00, C09C 1/22, C09C 1/30, C01B 33/107, H01F 1/00, H01F 1/36

(54) **Silicium-Eisen-Mischoxidpulver**
Silicium-iron mixed oxide powder
Poudre de mélange d'oxyde silicium/fer

(43) Veröffentlichungstag der Anmeldung: 10.12.2008
(73) Patentinhaber: Evonik Degussa GmbH, 45128 Essen (DE)
(72) Erfinder: Katusic, Stipan, 65812 Bad Soden (DE); Pridöhl, Markus, 63538 Großkrotzenburg (DE); Zimmermann, Guido, 50321 Brühl (DE); Hahn, Rainer, 63654 Büdingen (DE); Pelz, Meike, 63456 Hanau (DE)

(56) Entgegenhaltungen:
- EP-A- 1 284 485
- EP-A- 1 308 240
- DE-A1-102004 041 746
- DE-A1-102005 049 136

## Beschreibung

Die Erfindung betrifft ein Silicium-Eisen-Mischoxidpulver, dessen Herstellung und Verwendung.

Silicium-Eisen-Mischoxidpartikel mit magnetischen Eigenschaften, insbesondere superparamagnetischen Eigenschaften, sind in der Literatur beschrieben. Die Herstellung dieser Partikel kann beispielsweise durch Sol-Gel-Verfahren oder pyrogene verfahren erfolgen. Bei letztgenannten werden in der Regel organische, chloridfreie Ausgangsstoffe eingesetzt. Diese Verfahren sind zur Herstellung größerer Mengen nicht wirtschaftlich.

Aus EP-A-1284485 ist nun ein Verfahren bekannt, bei dem chloridhaltige Ausgangsstoffe eingesetzt werden können und die erhaltenen Silicium-Eisen-Mischoxidpartikel trotz eines Chloridgehaltes von bis zu 1000 ppm noch gute magnetische Eigenschaften aufweisen. Die in EP-A-1284485 offenbarten Partikel umfassen superparamagnetische Eisenoxid-Domänen mit einem Durchmesser von 3 bis 20 nm in einer siliciumdioxidhaltigen Matrix. Im Vergleich mit den rein organischen Verfahren, bietet das in EP-A-1284485 offenbarte Verfahren ökonomische Vorteile, es besteht jedoch weiterhin der Wunsch nach kostengünstig herstellbaren Partikeln.

In EP-A-1308240 wird eine Dispersion offenbart, welche Partikel enthält, die superparamagnetische Metalloxid-Domänen in einer nichtmagnetischen Metalloxidmatrix aufweist. Die Partikel weisen bevorzugt einen Chlorgehalt von 50 bis 1000 ppm auf. Eine Dotierung der Partikel wird nicht offenbart.

Die Aufgabe der vorliegenden Erfindung war es daher Partikel mit guten magnetischen Eigenschaften bereitzustellen, die mittels eines wirtschaftlichen Verfahrens herstellbar sind.

Gegenstand der Erfindung ist ein Silicium-Eisen-Mischoxidpulver mit magnetischen Eigenschaften in Form aggregierter Primärpartikel, wobei
a) TEM-Aufnahmen das Vorliegen von Primärpartikeln aus räumlich voneinander getrennten Bereichen von Siliciumdioxid und Eisenoxid zeigen und der mittlere Partikeldurchmesser des Eisenoxides 2 bis 100 nm ist und
b) der Anteil an
   - Silicium, gerechnet als SiO₂, 5 bis 65 Gew.-%
   - Eisen, gerechnet als Fe₂O₃, 30 bis 90 Gew.-% und
   - der Anteil an Silicium und Eisen, jeweils als oben genannte Oxide gerechnet, mindestens 95 Gew.-% beträgt,
c) der Anteil an Chlorid 0,2 bis 3 Gew.-% beträgt,
d) wobei das Silicium-Eisen-Mischoxidpulver wenigstens 0,005 bis 2 Gew.-% einer Dotierkomponente aus der Gruppe bestehend aus den Oxiden von Mangan, Cobalt, Chrom, Europium, Yttrium, Samarium, Nickel und Gadolinium enthält.

Unter magnetischen Eigenschaften sind ferrimagnetische, ferromagnetische und/oder superparamagnetische Eigenschaften zu verstehen. Bevorzugt können erfindungsgemäße Pulver mit superparamagnetischen Eigenschaften sein.

Superparamagnetische Stoffe besitzen keine permanente (gleichgerichtete) Anordnung der elementaren magnetischen Dipole in Abwesenheit äußerer, einwirkender Magnetfelder. Sie können eine geringe Restmagnetisierung aufweisen.

Bevorzugt können erfindungsgemäße Pulver sein, deren Anteil an Silicium 50 ± 10 Gew.-% oder 20 ± 10 Gew.-% beträgt.

Bevorzugt können weiterhin erfindungsgemäße Pulver sein, deren Anteil an Eisen 50 ± 10 Gew.-% oder 80 ± 10 Gew.-% beträgt.

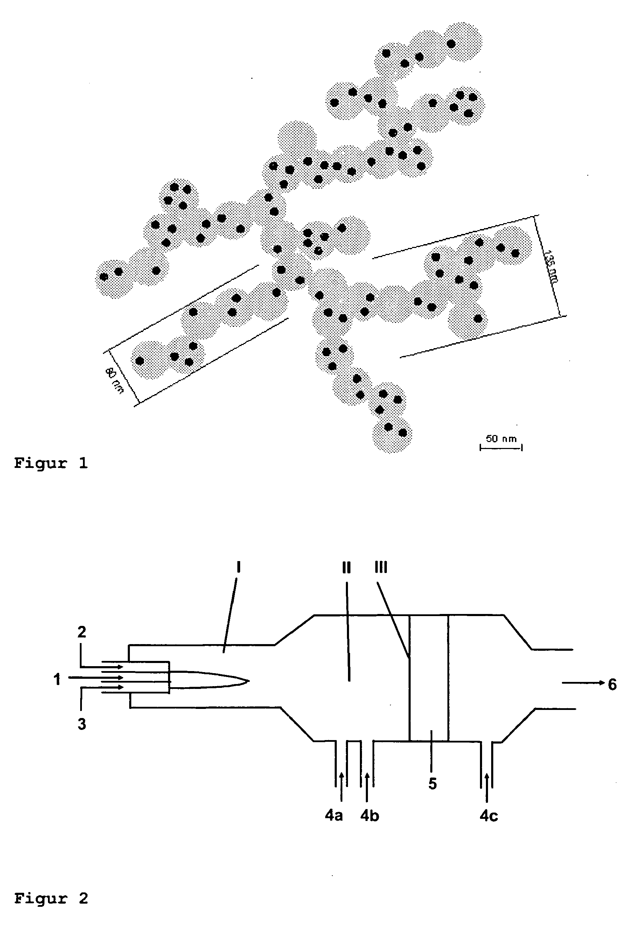

Die Primärpartikel umfassen solche, bei denen die Mischoxidkomponenten sowohl in als auch auf der Oberfläche eines Primärpartikels vorliegen. Im Kontaktbereich von Siliciumdioxid und Eisenoxid innerhalb eines Primärpartikels können Si-O-Fe vorliegen. Darüber hinaus können einzelne Primärpartikel auch nur aus Siliciumdioxid und/oder Eisenoxid vorliegen. Die Primärpartikel sind weitestgehend porenfrei, besitzen auf der Oberfläche freie Hydroxylgruppen auf und können unterschiedliche Aggregationsgrade aufweisen. Bei den Aggregaten handelt es sich um dreidimensionale Aggregate. In der Regel beträgt der Aggregatdurchmesser in jeweils eine Raumrichtung vorzugsweise nicht mehr als 250 nm, in der Regel 30 bis 200 nm, beträgt. Figur 1 zeigt schematisch eine solche dreidimensionale Struktur mit einem Aggregatdurchmesser von 135 nm und 80 nm. Mehrere Aggregate können sich zu Agglomeraten verbinden. Diese Agglomerate lassen sich leicht wieder trennen. Im Gegensatz hierzu ist die Zerlegung der Aggregate in die Primärpartikel in der Regel nicht möglich.

Das erfindungsgemäße Silicium-Eisen-Mischoxidpulver zeichnet sich insbesondere durch einen hohen Chloridgehalt von 0,2 bis 3 Gew.-%, bezogen auf die Silicium-Eisen-Mischoxidpartikel, aus. Der Chloridgehalt rührt von der Herstellung der Partikel her. Die erfindungsgemäßen Partikel werden durch einen pyrogenen Prozess erhalten, bei dem chlorhaltige Vorläufer eingesetzt werden. Die sich bildenden Partikel enthalten Chlor in der Regel in Form von Salzsäure. Diese kann in dem sich bildenden Partikel anhaften oder eingeschlossen werden.

Es wurde nun jedoch gefunden, dass Chloridgehalte von 0,2 bis 3 Gew.-% keinen oder nur einen vernachlässigbaren Einfluss auf die magnetischen Eigenschaften des Pulvers haben.

Bevorzugt kann ein Silicium-Eisen-Mischoxidpulver einen Chlorid-Gehalt von 0,5 bis 2,5 Gew.-% aufweisen. Besonders bevorzugt kann ein Silicium-Eisen-Mischoxidpulver mit einem Chloridgehalt von 1 bis 2 Gew.-% sein.

Die Bestimmung des Gesamtchloridgehaltes erfolgt nach durch Wickbold-Verbrennung oder durch Aufschluss mit anschließender Titration oder Ionenchromatographie.

Weiterhin zeigen TEM-Aufnahmen des erfindungsgemäßen Pulvers das Vorliegen von Primärpartikeln aus räumlich voneinander getrennten Bereichen von Siliciumdioxid und Eisenoxid. Dabei kann Siliciumdioxid eine Hülle um das Eisenoxid mit einer Dicke von 1 bis 15 nm ausbilden.

Der mittlere Durchmesser der Eisenoxidanteile beträgt 2 bis 100 nm. Vorzugsweise ist der mittlere Partikeldurchmesser kleiner als 70 nm . Besonders bevorzugt kann ein Bereich von >20 bis 60 nm sein.

Das erfindungsgemäße Silicium-Eisen-Mischoxidpulver kann weiterhin wenigstens einen oder mehrere Primärpartikel enthalten, die aus Siliciumdioxid oder Eisenoxid bestehen, also in denen nicht Siliciumdioxid und Eisenoxid gemeinsam vorliegen. Die Anteile von Primärpartikeln, die nur Siliciumdioxid oder Eisenoxid aufweisen, können durch Auszählung aus TEM-Aufnahmen, in der Regel werden einige Tausend Primärpartikel ausgewertet, erhalten werden. Die Anteile betragen 0 bis maximal 5%, in der Regel 0 bis <1%, der ausgezählten Primärpartikel.

Der Siliciumdioxidanteil im erfindungsgemäßen Mischoxidpulver kann sowohl kristallin wie amorph vorliegen, wobei rein amorphes Siliciumdioxid bevorzugt ist.

Der Eisenoxidanteil der Partikel des erfindungsgemäßen Mischoxidpulvers weist vorzugsweise als Hauptbestandteil Magnetit und/oder Maghemit auf. Daneben kann es, in Summe, bis zu 15%, in der Regel weniger als 10%, bezogen auf die Eisenoxide, Hämatit, beta-Fe2O3 und Eisensilikat enthalten.

Besonders bevorzugt kann ein insbesondere ein Mischoxidpulver sein, bei dem der Anteil von Magnetit und/oder Maghemit, bezogen auf die Eisenoxide, mindestens 80%, ganz besonders bevorzugt mindestens 90%, beträgt.

Weiterhin kann es, wenn es darum geht die magnetischen Eigenschaften des Pulvers zu variieren, vorteilhaft sein, Pulver bereitzustellen, bei denen das Gewichtsverhältnis Maghemit/Magnetit 0,3:1 bis 100:1 ist. Ebenso ist es möglich, dass das Eisenoxid nur in Form von Maghemit vorliegt.

Der Anteil an Eisenoxid, gerechnet als Fe₂O₃, im erfindungsgemäßen Pulver, liegt bei 30 bis 90 Gew.-%. Vorzugsweise kann das Silicium-Eisen-Mischoxidpulver einen Anteil an Eisenoxid von 50 ± 10 Gew.-% oder 80 ± 10 Gew.-% aufweisen. Besonders bevorzugt ist ein Bereich von 50 ± 5 oder 80 ± 5 Gew.-%.

Die Summe an Siliciumdioxid und Eisenoxid im erfindungsgemäßen Pulver beträgt mindestens 95 Gew.-%, bevorzugt mindestens 98 Gew.-% und besonders bevorzugt mindestens 98,5 Gew.-%.

Neben Siliciumdioxid, Eisenoxid und Chlorid enthält das erfindungsgemäße Mischoxidpulver wenigstens eine Dotierkomponente . Diese wird ausgewählt aus der Gruppe bestehend aus den Oxiden von Mangan, Cobalt, Chrom, Europium, Yttrium, Samarium, Nickel und Gadolinium.

Eine besonders bevorzugte Dotierkomponente ist Manganoxid.

Der Anteil der Dotierkomponente beträgt 0,005 bis 2 Gew.-%, bevorzugt 0,5 bis 1,8 Gew.-% und besonders bevorzugt 0,8 bis 1,5 Gew.-% jeweils berechnet als Oxid und bezogen auf das Mischoxidpulver.

Die Dotierkomponente ist in der Regel homogen im Pulver verteilt. Je nach Art des Dotierstoffes und der Reaktionsführung kann die Dotierkomponente in Bereichen von Siliciumdioxid oder Eisenoxid angereichert vorliegen.

Die BET-Oberfläche des erfindungsgemäßen Mischoxidpulvers kann in weiten Grenzen variiert werden. Als günstig hat sich eine BET-Oberfläche im Bereich von 10 bis 100 m²/g erwiesen. Bevorzugt können Pulver mit einer BET-Oberfläche von 40 bis 70 m²/g sein.

Die Partikel des erfindungsgemäßen Mischoxidpulvers können mit einer oder mehreren Schalen aus gleichen oder unterschiedlichen Polymeren oder Polymermischungen umschlossen werden. Besonders geeignete Polymere können Polymethylmethacrylate sein.

Das erfindungsgemäße Mischoxidpulver zeichnet sich durch eine hohe Sättigungsmagnetisierung aus. Bevorzugt können Mischoxidpulver sein deren Sättigungsmagnetisierung 40 bis 120 Am²/kg Fe₂O₃ ist und besonders bevorzugt 60 bis 100 Am²/kg Fe₂O₃ ist.

Weiterhin hat sich ein Mischoxidpulver als vorteilhaft erwiesen, welches folgende Merkmale aufweist:
a) BET-Oberfläche 50 ± 5 m²/g
b) Anteil an
   - Silicium, gerechnet als SiO₂, 50 ± 5 Gew.-%
   - Eisen, gerechnet als Fe₂O₃, 45 ± 5 Gew.-%
   - Chlorid 1,5 ± 0,5 Gew.-%
   - Mangan, gerechnet als MnO, 0,5 ± 0,3 Gew.-%, wobei sich die Summe der Oxide zu 100% addiert,
c) mittlerer Durchmesser des Eisenoxides 10-30 nm
d) Anteil (Magnetit + Maghemit), bezogen auf Eisenoxid, 90 ± 10 Gew.-%.

Weiterhin hat sich ein Mischoxidpulver als vorteilhaft erwiesen, welches folgende Merkmale aufweist:
a) BET-Oberfläche 50 ± 10 m²/g
b) Anteil an
   - Silicium, gerechnet als SiO₂, 10 ± 5 Gew.-%
   - Eisen, gerechnet als Fe₂O₃, 85 ± 5 Gew.-%
   - Chlorid 1,0 ± 0,2 Gew.-%
   - Mangan, gerechnet als MnO, 1,8 ± 0,2 Gew.-%
c) mittlerer Durchmesser des Eisenoxides 10 - 30 nm
d) Anteil (Magnetit + Maghemit), bezogen auf Eisenoxid, 90 ± 10 Gew.-%.

Ein weiterer Gegenstand der Erfindung ist ein Verfahren zur Herstellung des erfindungsgemäßen Silicium-Eisen-Mischoxidpulvers bei dem man
a) 5 bis 65 Gew.-% ein oder mehrere dampfförmige Halogensiliciumverbindungen, gerechnet als SiO₂,
b) 30 bis 90 Gew.-% Eisenchlorid, gerechnet als Fe₂O₃, in Form einer Lösung und
c) 0,005 bis 2 Gew.-% einer oder mehrerer Dotierverbindungen, gerechnet als Oxid,
d) getrennt der Hochtemperaturzone eines Reaktors zuführt,
e) in der Hochtemperaturzone bei Temperaturen von 700 bis 2500°C mit einem Überschuss an Sauerstoff oder einem sauerstoffhaltigen Gas zur Reaktion bringt,
f) und in einer der Hochtemperaturzone nachfolgenden zweiten Zone des Reaktors, dem Reaktionsgemisch, an einer oder mehreren Stellen, reduzierende Gase in einer Menge zumischt, dass insgesamt in dieser zweiten Zone eine reduzierende Atmosphäre entsteht und die Temperatur des Reaktionsgemisches auf 500°C bis 150°C reduziert wird,
g) den erhaltenen Feststoff in einer weiteren, dritten Zone, in der ebenfalls noch eine reduzierende Atmosphäre vorliegt, von gasförmigen Stoffen abtrennt und
h) gegebenenfalls den gasförmigen Stoffen soviel Luft zumischt, dass das Abgas keine reduzierende Atmosphäre ergibt.

Unter Lösung im Sinne der Erfindung ist eine solche zu verstehen, bei der der Hauptbestandteil der flüssigen Phase Wasser, Wasser und ein oder mehrere organische Lösungsmittel oder eine Mischung von Wasser mit einem oder mehreren organischen Lösungsmitteln ist. Als bevorzugte organische Lösungsmittel können Alkohole wie Methanol, Ethanol, n-Propanol, iso-Propanol, n-Butanol oder isoButanol oder tert.-Butanol eingesetzt werden. Besonders bevorzugt sind solche Lösungen, bei denen Wasser der Hauptbestandteil ist.

Unter Dotierkomponente im Sinne der Erfindung ist das im erfindungsgemäßen Pulver vorliegende Oxid eines Elementes zu verstehen. Unter Dotierstoff ist die Verbindung zu verstehen, die im Verfahren eingesetzt wird, um die Dotierkomponente zu erhalten. Der Dotierstoff kann entweder getrennt von der Halogensiliciumverbindung und des Eisenchlorides zugeführt werden. Dies kann in Form eines Dampfes oder einer Lösung erfolgen. Der Dotierstoff kann aber auch in Form eines Dampfes zusammen mit der Halogensiliciumverbindung oder als Bestandteil der Eisenchlorid enthaltenden Lösung eingebracht werden.

In einer bevorzugten Ausführungsform wird die Temperatur aus einer Flamme resultiert, die durch Zündung eines Gemisches, welches ein oder mehrere Brenngase und ein sauerstoffenthaltendes Gas enthält, erzeugt wird und die in den Reaktionsraum hinein brennt.

Geeignete Brenngase können Wasserstoff, Methan, Ethan, Propan, Erdgas, Acetylen, Kohlenmonoxid oder Gemische der vorgenannten Gase sein. Wasserstoff ist am besten geeignet. Als sauerstoffenthaltendes Gas wird in der Regel Luft eingesetzt.

Das Reaktionsgemisch umfasst neben den Mischoxiden auch die gasförmigen Reaktionsprodukte und gegebenenfalls nicht abreagierte gasförmige Einsatzstoffe. Gasförmige Reaktionsprodukte können beispielsweise Chlorwasserstoff und Kohlendioxid sein.

Das Reaktionsgemisch wird gemäß der Erfindung mit einem reduzierenden Gas oder einem Gemisch eines reduzierenden Gases mit Luft vermischt, welches in Zone II des Reaktors zugegeben wird. Das reduzierende Gas kann beispielsweise Formiergas, Wasserstoff, Kohlenmonoxid, Ammoniak oder Mischungen der vorgenannten Gase sein, wobei Formiergas besonders bevorzugt sein kann. Ein solches reduzierendes Gas wird gemäß dem erfindungsgemäßen Verfahren in einer solchen Menge zum Reaktionsgemisch gegeben, dass eine reduzierende Atmosphäre entsteht.

Unter einer reduzierenden Atmosphäre im Sinne der Erfindung ist eine solche zu verstehen, bei der der lambda-Wert kleiner als 1 ist.

Lambda errechnet aus dem Quotienten der Summe des Sauerstoffanteiles des sauerstoffhaltigen Gases dividiert durch die Summe aus der zu oxidierenden und/oder zu hydrolysierenden Eisen- und Silciumverbindungen und des wasserstoffhaltigen Brenngases, jeweils in mol/h.

Bei Verwendung von beispielsweise Wasserstoff und Luft in der Hochtemperaturzone (Zone I) und Luft und Formiergas (80:20 N₂/H₂) in Zone II errechnet sich der lambda-Wert gemäß folgender Formel in Zone II und III zu 0,21·überschüssige Luft aus Zone I/0,5·(H₂+0,2·Formiergas) jeweils bezogen auf die eingespeiste Gasmenge pro Zeiteinheit.

Für die Zone I, ist der lambda-Wert größer als 1. Bei Verwendung von Wasserstoff und Luft wird der lambda-Wert in Zone I gemäß folgender Formel bestimmt: 0,21·Luft /0,5· H₂.

In einer bevorzugten Ausführungsform kann die Verweilzeit in der ersten Zone zwischen 0,8 und 1,5 Sekunden betragen.

In einer weiteren bevorzugten Ausführungsform kann die Summe der Verweilzeiten in der zweiten und dritten Zone zwischen 15 Sekunden und 15 Minuten betragen.

In die zweite Reaktorzone kann weiterhin zusätzlich Wasserdampf eingebracht werden.

Figur 2 zeigt beispielhaft einen schematischen Aufbau zur Durchführung des erfindungsgemäßen Verfahrens. I, II und III bezeichnen die drei Reaktionszonen. Weiterhin gilt:
1 = zerstäubte Lösung von Eisenchlorid, die noch zusätzliche Dotierstoffe enthält;
2 = Sauerstoff enthaltendes Gas, bevorzugt Luft;
3 = Brenngas, bevorzugt Wasserstoff;
4a = reduzierendes Gas; 4b = Wasserdampf (optional); 4c = Luft (optional)
5 = erfindungsgemäßes Pulver auf Filter abgeschieden;
6 = Abgas

Als Eisenchlorid kann vorzugsweise Eisen(II)chlorid (FeCl2), Eisen (III) chlorid (FeCl3) oder eine Mischung der beiden eingesetzt werden. Das Eisenchlorid wird gemäß der Erfindung als Lösung eingebracht. Die Konzentration an Eisenchlorid kann dabei bevorzugt 1 bis 30 Gew.-% und besonders bevorzugt 10 bis 20 Gew.-%, jeweils bezogen auf die Lösung, betragen.

Als Halogensiliciumverbindungen können SiCl₄, CH₃SiCl₃, (CH₃)₂SiCl₂, (CH₃)₃SiCl, (CH₃)₄Si, HSiCl₃, (CH₃)₂HSiCl, CH₃C₂H₅SiCl₂, Disilane mit der allgemeinen Formel RnCl₃₋ₙSiSiRₘCl₃₋ₘ mit R=CH₃ und n+m = 2,3,4,5 und 6, sowie Gemische der vorgenannten Verbindungen bevorzugt eingesetzt werden. Besonders bevorzugt ist der Einsatz von Siliciumtetrachlorid.

Weiterhin können Halogensiliciumverbindungen aus denen bei der Müller-Rochow-Synthese anfallenden Fraktionsschnitten eingesetzt werden, wobei die Fraktionsschnitte gegebenenfalls noch Anteile von C₁-C₁₂- Kohlenwasserstoffen enthalten können. Der Anteil dieser Kohlenwasserstoffe kann bis zu 10 Gew.-%, bezogen auf eine Fraktion, betragen. Gewöhnlich liegen diese Anteile zwischen 0,01 und 5 Gew.-%, wobei der Anteil der C₆-Kohlenwasserstoffe, beispielsweise cis- und trans-2-Hexen, cis- und trans-3-Methyl-2-penten, 2,3-Dimethyl-2-buten, 2-Methylpentan, 3-Methylpentan in der Regel überwiegt. Wenn Halogensiliciumverbindungen aus der Müller-Rochow-Synthese eingesetzt werden, erfolgt dies bevorzugt in Gemischen mit Siliciumtetrachlorid.

Die Erfindung umfasst als weiteren Gegenstand ein zweites Verfahren zur Herstellung des Silicium-Eisen-Mischoxidpulvers bei dem man
a) 5 bis 65 Gew.-% ein oder mehrere dampfförmige Halogensiliciumverbindungen, gerechnet als SiO₂,
b) 30 bis 90 Gew.-% Eisenchlorid, gerechnet als Fe₂O₃, in Form einer Lösung und
c) 0,005 bis 2 Gew.-% einer oder mehrerer Dotierverbindungen, gerechnet als Oxid,
d) getrennt der Hochtemperaturzone eines Reaktors zuführt,
e) in der Hochtemperaturzone bei Temperaturen von 700 bis 2500°C in einer Flamme, die durch die Zündung eines Gemisches, welches ein oder mehrere Brenngase und ein sauerstoffenthaltendes Gas enthält, erzeugt wird und die in den Reaktionsraum hinein brennt und bei der Sauerstoff im Unterschuss eingesetzt wird, zur Reaktion bringt,
f) in einer der Hochtemperaturzone nachfolgenden zweiten Zone des Reaktors, dem Reaktionsgemisch, an einer oder mehreren Stellen Luft oder Luft und Wasserdampf in einer Menge zumischt, dass insgesamt in dieser zweiten Zone eine
   - reduzierende Atmosphäre oder
   - oxidierende Atmosphäre entsteht
   und die Temperatur auf 500°C bis 150°C reduziert wird und
g) den erhaltenen Feststoff in einer weiteren, dritten Zone von gasförmigen Stoffen der gleichen Atmosphäre wie sie in der zweiten Zone vorliegt, abtrennt, und
h) gegebenenfalls den gasförmigen Stoffen soviel Luft zumischt, dass das Abgas keine reduzierende Atmosphäre ergibt.

Unter einer reduzierenden Atmosphäre im Sinne der Erfindung ist eine solche zu verstehen, bei der der lambda-Wert in Zone I, II und III kleiner als 1 ist.

Unter einer oxidierenden Atmosphäre im Sinne der Erfindung ist eine solche zu verstehen, bei der der lambda-Wert in Zone II und III größer als 1 ist.

Bezüglich der Art der eingesetzten Verbindungen und der Reaktionsparameter gilt, was für das bereits genannte Verfahren beschrieben ist.

Figur 2 zeigt beispielhaft einen schematischen Aufbau zur Durchführung dieses erfindungsgemäßen Verfahrens. I, II und III bezeichnen die drei Reaktionszonen. Weiterhin gilt:
1 = zerstäubte Lösung von Eisenchlorid, die noch zusätzliche Dotierstoffe enthält;
2 = Sauerstoff enthaltendes Gas, bevorzugt Luft;
3 = Brenngas, bevorzugt Wasserstoff (Überschuss);
4a = Luft (Überschuss oder Unterschuss; 4b = Wasserdampf (optional); 4c = Luft (optional);
5 = erfindungsgemäßes Pulver auf Filter abgeschieden;
6 = Abgas.

Ein weiterer Gegenstand der Erfindung ist die Verwendung des Silicium-Eisen-Mischoxidpulvers zur Herstellung von Dispersionen und Pasten.

Ein weiterer Gegenstand der Erfindung ist die Verwendung des Silicium-Eisen-Mischoxidpulvers als Bestandteil von Kautschukmischungen.

Ein weiterer Gegenstand der Erfindung ist die Verwendung des Silicium-Eisen-Mischoxidpulvers als Bestandteil von Polymerzubereitungen.

Ein weiterer Gegenstand der Erfindung ist die Verwendung des Silicium-Eisen-Mischoxidpulvers als Bestandteil von Klebstoffzusammensetzungen.

Ein weiterer Gegenstand der Erfindung ist die Verwendung des Silicium-Eisen-Mischoxidpulvers als Bestandteil von durch Schweißen im elektromagnetischen Wechselfeld erhältlichen Kunststoffverbundformkörpern.

### Beispiele

### Analytische Verfahren

Bestimmung der BET-Oberfläche: Die BET-Oberfläche der erfindungsgemäßen Partikel wurde bestimmt nach DIN 66131.

Bestimmung des Gehaltes an Siliciumdioxid und Eisenoxid: Ca. 0,3 g der erfindungsgemäßen Partikel werden genau in einen Platintiegel eingewogen und zur Bestimmung des Glühverlustes bei 700°C für 2 h in einem Tiegel geglüht, im Exsikkator abgekühlt und zurückgewogen. Nach Abspülen der Ränder mit Reinstwasser wird das Probenmaterial mit 1 ml H₂SO₄ p.a. 1:1 und mind. 3 ml HF 40% p.a. auf einer Heizplatte zur Trockene abgeraucht. Der Gewichtsverlust durch das Abrauchen wird als SiO₂ angenommen und der Rest als Fe₂O₃.

Bestimmung des Chlorid-Gehaltes: Ca. 0,3 g der erfindungsgemäßen Partikel werden genau eingewogen, mit 20 ml 20 prozentiger Natronlauge p.a. versetzt, gelöst und unter Rühren in 15 ml gekühlte HNO₃ überführt. Der Chlorid-Anteil in der Lösung wird mit AgNO₃-Lösung (0,1 mol/l oder 0,01 mol/l) titriert.

Bestimmung der adiabaten Verbrennungstemperatur: Sie errechnet sich aus der Massen- und Energiebilanz der in den Reaktor eingehenden Stoffströme. Bei der Energiebilanz wird sowohl die Reaktionsenthalpie der Wasserstoffverbrennung und der Umsetzung des Siliciumtetrachlorids zu Siliciumdioxid bzw. des Eisen(II)chlorides zu Eisen(II)oxid berücksichtigt als auch die Verdampfung der wässerigen Lösung.

Bestimmung der Verweilzeit: Sie errechnet sich aus dem Quotienten des durchströmten Anlagenvolumens und des Betriebsvolumenstroms der Prozessgase bei adiabater Verbrennungstemperatur.

Bestimmung der Curie-Temperatur: Die Curie-Temperatur wird mittels Thermogravimetrie (TG) bestimmt. Dieser Bestimmungsmethode liegt das Verhalten magnetischer Stoffe zugrunde ihre Magnetisierbarkeit bei einer charakteristischen Temperatur, der Curie-Temperatur, zu verlieren. Das Ausrichten der Elementarmagnete wird dabei wegen zunehmender Wärmebewegung verhindert. Misst man die TG-Kurve einer ferromagnetischen Kurve in einem inhomogenen Magnetfeld, verschwindet die Magnetkraft bei der Curie-Temperatur. Das inhomogene Magnetfeld wird durch Anbringen von zwei Magneten seitlich oberhalb vom Ofenkörper erzeugt. Die plötzliche Kraftänderung am Curie-Punkt bewirkt das Ende der scheinbaren Gewichtszunahme. Die Curie-Temperatur entspricht dabei dem extrapolierten Ende der TG-Stufe. Zur Darstellung des reinen magnetischen Verhaltens wird das erfindungsgemäße Pulver bis 1000°C 1. im Magnetfeld, 2. ohne Magnetfeld aufgeheizt, und Messung 2 von Messung 1 subtrahiert. Diese Differenzkurve zeigt nun das reine magnetische Verhalten. Die TG-Kurve zeigt zu Beginn des Aufheizens eine Zunahme der Magnetkraft, dies entspricht einer scheinbaren Abnahme des Gewichtes. Ab einer bestimmten Temperatur setzt die Abnahme der Magnetkraft ein, was zu einer scheinbaren Gewichtszunahme führt. Diese Gewichtszunahme endet bei der Curie-Temperatur.

### Röntgendiffraktogramme (XRD)

### Messung:

Reflexion, θ/θ- Diffraktometer, Co-Kα, U = 40kV, I = 35mA Linearer PSD mit Fe- Filter, Probendrehung
Blenden : 2x8mm, 0,8mm
Winkelbereich (2Theta): 15 - 112,5°
Schrittweite: 0,2°
Auswertung: Rietveld-Programm SiroQuant®.

### Beispiele

Beispiel 1 (nicht erfindungsgemäß) :0,87 kg/h SiCl₄ werden verdampft und mit 7,0 Nm³/h Wasserstoff sowie 18,00 Nm³/h Luft in eine Mischzone eingespeist.

Zusätzlich wird ein Aerosol, das aus einer 25 gewichtsprozentigen Lösung von Eisen(II)chlorid, entsprechend 4,60 kg/h Eisen(II)chlorid, in Wasser mittels einer Zweistoffdüse, erhalten wird, mittels eines Traggases (3 Nm³/h Stickstoff) in die Mischzone innerhalb des Brenners eingebracht. Das homogen gemischte Gas-Aerosol-Gemisch verbrennt in der Zone I des Reaktors bei einer adiabaten Verbrennungstemperatur von etwa 1300°C und einer Verweilzeit von etwa 40 msec.

Anschließend wird dem aus der Zone I austretenden Reaktionsgemisch in einer Zone II 6500 Nm³/h Formiergas (80:20 Vol% N2/H2) zugemischt. Dadurch kühlt das gesamte Reaktionsgemisch auf 250°C ab.

In der der Zone II nachfolgenden Zone III wird der Feststoff auf einem Filter von den gasförmigen Stoffen abgeschieden und dem Abgasstrom wird 10 Nm³/h Luft beigemischt.

Die physikalisch-chemischen Werte des erhaltenen Feststoffes sind in Tabelle 1 wiedergegeben.

Beispiel 2 (nicht erfindungsgemäß): Wie Beispiel 1, jedoch mit unterschiedlichen Einsatzstoffmengen für SiCl₄ und FeCl₂ .

Beispiel 3 (nicht erfindungsgemäß): Wie Beispiel 1, jedoch unter Verwendung einer Lösung von 97 Teilen Eisen(II)chlorid und 3 Teilen Eisen(III)chlorid anstelle einer Lösung von Eisen(II)chlorid.

Beispiel 4 (nicht erfindungsgemäß): Wie Beispiel 1, jedoch unter Verwendung einer Lösung von Eisen(III)chlorid anstelle einer Lösung von Eisen(II)chlorid. Weiterhin werden zusätzlich 6,0 Nm3/h Wasserdampf in die Zone II eingeleitet.

Beispiel 5-7 (erfindungsgemäß): Wie Beispiel 1, jedoch unter Verwendung einer Lösung aus 25 Gew.-% Eisen(II)chlorid und 20 Gew.-% Mangan(II)chlorid.

Beispiel 8 (nicht erfindungsgemäß): 0,28 kg/h SiCl₄ werden verdampft und mit 7,0 Nm³/h Wasserstoff sowie 16 Nm³/h Luft in eine Mischzone eingespeist.

Zusätzlich wird ein Aerosol, das aus einer 25 gewichtsprozentigen Lösung von Eisen(II)chlorid in Wasser mittels einer Zweistoffdüse, erhalten wird, mittels eines Traggases (4,0 Nm³/h Stickstoff) in die Mischzone innerhalb des Brenners eingebracht. Das homogen gemischte Gas-Aerosol-Gemisch verbrennt in der Zone I des Reaktors bei einer adiabaten Verbrennungstemperatur von etwa 1230°C und einer Verweilzeit von etwa 50 msec.

Anschließend wird dem aus der Zone I austretenden Reaktionsgemisch in einer Zone II 12 kg/h Quenchluft zugemischt. Weiterhin werden zusätzlich 8 kg/h Wasserdampf in die Zone II eingeleitet Dadurch kühlt das gesamte Reaktionsgemisch auf 260°C ab.

In der der Zone II nachfolgenden Zone III wird der Feststoff auf einem Filter von den gasförmigen Stoffen abgeschieden. Dabei liegt bei der Abscheidung eine oxidierende Atmosphäre vor.

Beispiel 9 (erfindungsgemäß): wie Beispiel 8, jedoch unter Verwendung einer Lösung aus 25 Gew.-% Eisen(II)chlorid und 20 Gew.-% Mangan(II)chlorid.

In der der Zone II nachfolgenden Zone III wird der Feststoff auf einem Filter von den gasförmigen Stoffen abgeschieden. Dabei liegt bei der Abscheidung eine reduzierende Atmosphäre vor.

Einsatzstoffe, Einsatzmengen und Reaktionsparameter der Beispiele 1 bis 9 sind in Tabelle 1 wiedergegeben. Die physikalisch-chemischen Werte der erhaltenen Feststoffe sind in Tabelle 2 wiedergegeben.

Vergleichsbeispiel 1 (Vgl-1): 0,14 kg/h SiCl₄ werden bei ca. 200°C verdampft und mit 3,5 Nm³/h Wasserstoff sowie 15 Nm³/h Luft in eine Mischzone eingespeist. Zusätzlich wird ein Aerosol, das aus einer 10 gewichtsprozentigen wässerigen Eisen(III)chloridlösung, entsprechend 1,02 kg/h Eisen(II)chlorid, mittels einer Zweistoffdüse, erhalten wird, mittels eines Traggases (3 Nm³/h Stickstoff) in die Mischzone innerhalb des Brenners eingebracht.

Das homogen gemischte Gas-Aerosol-Gemisch verbrennt dort bei einer adiabaten Verbrennungstemperatur von etwa 1200°C und einer Verweilzeit von etwa 50 msec.
Nach der Flammenhydrolyse werden die Reaktionsgase und das entstandene Pulver abgekühlt und mittels eines Filter wird der Feststoff von dem Abgasstrom abgetrennt. In einem weiteren Schritt werden durch Behandlung mit wasserdampfhaltigem Stickstoff noch anhaftende Salzsäurereste vom Pulver entfernt.
Das Pulver weist einen Eisenoxidanteil von 50 Gew.-%, eine BET-Oberfläche von 146 m2/g, einen Chloridgehalt von 368 ppm und eine Sättigungsmagnetisierung von 17 Am2/kg auf.

Vergleichsbeispiel 2 (Vgl-2): Wie Vgl-1, jedoch unter Einsatz von 0,23 kg/h SiCl₄ und 0,41 kg/h FeCl₃. Das Pulver weist einen Eisenoxidanteil von 50 Gew.-%, eine BET-Oberfläche von 174 m2/g, einen Chloridgehalt von 220 ppm und eine Sättigungsmagnetisierung von 6,5 Am2/kg auf.

Vergleichsbeispiel 3 (Vgl-3): Wie Vgl-1, jedoch unter Einsatz von 0,21 kg/h SiCl₄ und 0,40 kg/h FeCl₂.
Das Pulver weist einen Eisenoxidanteil von 25 Gew.-%, eine BET-Oberfläche von 143 m²/g, einen Chloridgehalt von 102 ppm und eine Sättigungsmagnetisierung von 10,4 Am²/kg auf.

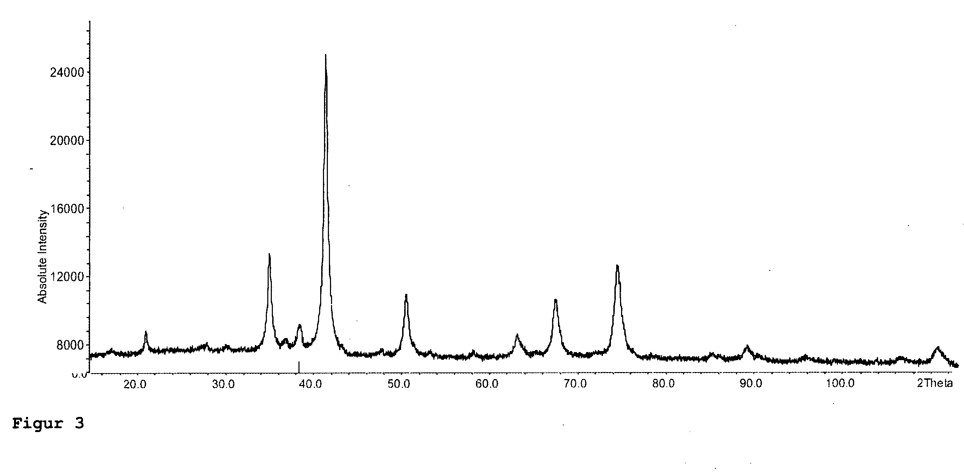

Röntgendiffraktogramme (XRD): Hämatit ist wegen der freistehenden Reflexe eindeutig identifizierbar. Die Reflexe des Magnetits und des Maghemits überlagern sehr stark. Der Maghemit ist signifikant anhand der Reflexe (110) und (211) im vorderen Winkelbereich nachweisbar. Mit Hilfe der Rietveld- Methode wird die quantitative Phasenanalyse ausgeführt (Fehler ca. 10% relativ). Figur 3 zeigt das Röntgendiffraktogramm des Pulvers aus Beispiel 5.

Magnetisierung: Die Sättigungsmagnetisierung ist das maximal erreichbare magnetische Moment pro Volumeneinheit. Die Sättigungsmagnetisierung wird in unendlich großen Magnetfeldern erreicht. Die Magnetisierung, die sich bei einem äußeren Feld von B = 5 T einstellt entspricht näherungsweise der Sättigungsmagnetisierung und wird als Maß für die Magnetisierbarkeit herangezogen. Die Sättigungsmagnetisierung der erfindungsgemäßen aus den Beispielen 1 bis 9 ist deutlich höher als die der Vergleichsbeispiele 1 bis 3.

### Hochauflösende Transmissionselektronenmikroskopie (HR-TEM):

Für die Mangan enthaltenden erfindungsgemäßen Pulver aus den Beispielen 5-7 wurden mittels HR-TEM-Aufnahmen die Gitterabstände bestimmt. Die Pulver zeigen Gitterabstände von 0,25 nm, 0,26 nm und 0,27 nm. Diese Werte stimmen sehr gut mit den Referenzwerten für Maghemit 0,25 nm, Magnetit 0,252 nm und Hämatit 0.269 überein. Werte, die für das Vorliegen eines Manganoxides sprechen würden, werden nicht gefunden. Daraus ist auch zu schließen, dass Mangan in das Gitter des Eisenoxides eingebaut ist.

Das erfindungsgemäße Silicium-Eisen-Mischoxidpulver zeichnet sich durch ausgezeichnete magnetische Eigenschaften auf. Entgegen den in der Literatur beschriebenen negativen Einflüssen von Chlorid auf die magnetischen Eigenschaften, zeigt die vorliegende Erfindung, dass bis zu 3 Gew.-% Chlorid im Pulver ohne Auswirkung auf die magnetischen Eigenschaften bleiben. Vielmehr erlauben die neuen, erfindungsgemäßen Verfahren, die Herstellung von Pulvern mit hohem Chloridgehalt, deren Sättigungsmagnetisierungen deutlich über denen aus dem Stand der Technik liegen. Die Verfahren erlauben es zudem, große Mengen an Pulver kostengünstig herzustellen.

Die erfindungsgemäßen Pulver können vielseitig eingesetzt werden.

### Beispiele 11 A-C: Herstellung von Dispersionen

Beispiel 11A (erfindungsgemäß): 12,0 g des Pulvers aus Beispiel 5 werden in 108 g destilliertes Wasser gegeben und anschließend soviel 1M NaOH zugegeben, dass der pH-Wert zwischen 9,1 und 9,2 liegt. Mittels eines Dissolvers wird 5 min bei 2000 U/min dispergiert. Der pH-Wert der Dispersion beträgt 9,1, der Gehalt an erfindungsgemäßem Pulver 10 Gew.-% und der mittlere Partikeldurchmesser d₅₀ 320 nm.

Beispiel 11B (erfindungsgemäß): wie Beispiel 11A, jedoch anschließend an Dispergierung mittels Dissolver, Dispergierung mittels eines Ultraturrax über einen Zeitraum von 5 min bei 10 000 U/min. Der pH-Wert der Dispersion beträgt 9,1, der Gehalt an erfindungsgemäßem Pulver 10 Gew.-% und der mittlere Partikeldurchmesser d₅₀ 180 nm.

Beispiel 11C (erfindungsgemäß): wie Beispiel 11B, jedoch anschließend an Dispergierung mittels Dissolver und Ultraturrax, Dispergierung mittels Ultraschall über einen Zeitraum von 4 min bei einer Amplitude von 80 %. Der pH-Wert der Dispersion beträgt 9,1, der Gehalt an erfindungsgemäßem Pulver 10 Gew.-% und der mittlere Partikeldurchmesser d₅₀ 140 nm.

### Beispiele 12: Kautschukmischungen

Das erfindungsgemäße Silicium-Eisen-Mischoxidpulver kann in Kautschukmischungen eingearbeitet werden. Dies kann beispielsweise mit den in Tabelle 3A gezeigten Einsatzstoffen und der in Tabelle 3B gezeigten Vorschrift erfolgen.

Die Proben können in einem Hochfrequenzfeld rasch aufgeheizt werden, wobei gleichzeitig die Menge an erfindungsgemäßem Pulver gering ist.

### Beispiel 13 (nicht erfindungsgemäß):

### Klebstoffzusammensetzungen

25 g des Pulvers aus Beispiel 1 werden in 100 ml Ethanol suspendiert und 20 g Oxy-bis(benzosulfohydrazid) als Treibmittel zugegeben. Die Mischung wird unter Rühren für 5 Stunden auf 60°C erwärmt und anschließend das Lösemittel am Rotationsdampfer abgezogen. Die trockene Formulierung wird in der Kugelmühle für 3 Minuten gemahlen und anschließend gesiebt. Die Fraktion mit einer Korngröße von nominell kleiner 63 µm wird für die weiteren Versuche verwendet. 10 g dieses Pulvers werden mit 300 g des feuchtigkeitshärtenden einkomponentigen Polyurethanklebstoffes Dinitrol PUR 501 FC (Dinol GmbH) in dem mit Knethaken versehenen Mischer Planimax (Molteni) mit vermischt. Es wird 15 Minuten auf Stufe 1 (150 Upm) geknetet.
Mit dem so modifizierten Klebstoff wird eine Dickschichtklebung aus einem sandgestrahlten und entfetteten Aluminiumblech und einer 3mm dicken Floatglasscheibe angefertigt. Die Überlappungslänge ist 25 mm und die Klebschichtdicke 3 mm. Nach einer Härtungszeit von 1 Woche bei 25°C und 50 % relativer Luftfeuchte wird die Verbindung durch induktive Anregung wieder getrennt. Das Trennen der Verbindung erfolgt durch Anregen mit einem Halbleitergenerator M230 der Firma STS. Die Anregungsfrequenz dieses Generators ist 300 kHz. Zur induktiven Anregung des Klebstoffes in der Klebverbindung wird eine Spule mit drei Windungen und einem Innendurchmesser von 3 cm verwendet. Die Klebfläche wird in der Mitte der Spule senkrecht zur Spulenachse orientiert. Bei einer Leistung von 3000 W und einer Einwirkzeit von 2 min ist der Klebstoff durch das Aufschäumen des Treibmittels zerstört. Die beiden Fügeteile können einfach auseinander genommen werden.

### Beispiele 14: Durch Schweißen im elektromagnetischen Wechselfeld erhältliche Kunststoffverbundformkörper

2 kg der erfindungsgemäßen Mischoxidpartikel aus Beispiel werden mit 8 kg Polyamidgranulat (Vestamid® L1901; Bezeichnung nach ISO 1874-1: PA12, XN, 18-010; Degussa AG) in einem Doppelschneckenextruder ZE25-33D der Firma Berstorff bei 250°C und einem Durchsatz von 10 kg/h schmelzgemischt, stranggepresst und granuliert. Die Granulate werden anschließend zu Platten der Stärke 1 mm extrudiert.

Eine jegliche solche Platte wird zwischen je eine Platte des gleichen oder unterschiedlichen Kunststoff-Basismaterials (ohne erfindungsgemäßes Pulver) gelegt und dieser Mehrschichtaufbau mit Klebeband fest umwickelt. Anschließend wurde der Mehrschichtaufbau in ein elektromagnetisches Wechselfeld für vorgegebene Zeiten bei 100% Leistungsaufnahme gegeben.
Die Induktorspule hat dabei die folgenden Daten: Abmessungen: 200 x 45 x 40 mm³ (L x B x H), Material: Kupferrohr Vierkant 10 x 6 x 1 mm, Leistungsquerschnitts-Fläche: 28 mm², Spulenzuführungslänge: 120 mm, Spulenwindungszahl: 3, Spulenwicklungslänge (eff.) : 35 mm, Spulendurchmesser (Innen) : 20 mm bis 40 mm, Spuleninnenfläche: 720 mm², Induktivität (bei 100 kHz): ca. 270 nH, Arbeitsfrequenz: 323 kHz
Der verwendete Hochfrequenz-Halbleiter-Generator weist folgende folgenden Daten auf: Hersteller: STS - Systemtechnik Skorna GmbH, Typenbezeichnung: STS Typ M260S, Klemmleistung: 6 kW, Induktivitätsbereich: 250 - 1200 nH, Arbeitsfrequenz: 150 - 400 kHz (323 kRz mit der verwendeten Induktorspule).
Nach dem Entfernen der Probe aus dem Wechselfeld wird die Haftfestigkeit nach folgenden Noten beurteilt:

Bei einem Mehrschichtenaufbau
a) Vestamid® L1901 - Beispiel 14A - Vestamid® L1901 oder
b) Vestamid® L1901 - Beispiel 14A - Trogamid® X7323 oder
c) Vestamid® L1901 - Beispiel 14A - Trogamid® X7323 und einer Schweißdauer von 30 s wird eine Haftungsnote von jeweils 4 ermittelt. Dabei gilt: 0 = keine Haftung, 1 = geringfügige Haftung, 2 = etwas Haftung; mit geringem Aufwand zu trennen, 3 = gute Haftung; nur mit großem Aufwand und gegebenenfalls mit Hilfe von Werkzeugen zu trennen, 4 = untrennbare Haftung; Trennung nur durch Kohäsionsbruch.

**Tabelle 1: Reaktionsparameter der erfindungsgemäßen Beispiele 1 bis 9**

| **Beispiel** | | **1** | **2** | **3** | **4** | **5** | **6** | **7** | **8** | **9** |
|---|---|---|---|---|---|---|---|---|---|---|
| SiCl₄ | kg/h | 0,87 | 2,54 | 1,56 | 1,56 | 1,56 | 0,28 | 1,747 | 0,34 | 0,34 |
| Wasserstoff | Nm³/h | 7,00 | 6,60 | 6,60 | 6,60 | 6,60 | 6,60 | 6,60 | 7,00 | 8,00 |
| Luft | Nm³/h | 18,00 | 17,50 | 18,50 | 18,50 | 18,50 | 17,50 | 18,50 | 15,0 | 15 |
| FeCl₂ | kg/h | 4,60 | 2,46 | 0 | 0 | 4,50 | 4,50 | 4,122 | 4,45 | 4,360 |
| FeCl₃ | kg/h | 0 | 0 | 4,5 | 4,5 | 0 | 0 | 0 | 0 | 0 |
| MnCl₂ | kg/h | 0 | 0 | 0 | 0 | 0,060 | 0,090 | 0,128 | 0 | 0,087 |
| Traggas | Nm³/h | 3 | 5 | 4 | 4 | 4 | 4 | 4 | 3 | 3 |
| Adiabate Temp. | °C | 1300 | 1150 | 1200 | 1200 | 1200 | 1250 | 1200 | 1280 | 1210 |
| Verweilzeit | ms | 40 | 50 | 50 | 50 | 50 | 50 | 50 | 50 | 50 |
| Formiergas* | Nm³/h | 6500 | 4500 | 6000 | 6000 | 6000 | 4000 | 6000 | 0 | 0 |
| Quenchluft | Nm³/h | 0 | 0 | 0 | 0 | 0 | 0 | 0 | 12 | 3 |
| Wasserdampf | kg/h | 6,0 | 7,0 | 4,0 | 0 | 0 | 5,0 | 0 | 0 | 8,0 |
| Temperatur** | °C | 250 | 225 | 400 | 380 | 390 | 300 | 390 | 280 | 260 |
| Abscheidung*** | | red. | red. | red. | red. | red. | red. | red. | ox. | red. |

| | | | | | | | | | | |
|---|---|---|---|---|---|---|---|---|---|---|
| * 4:1 Volumenanteile H2/N2; ** Nach Abkühlung; *** red.(ox.) = Abscheidung des Pulvers in reduzierender (oxidierender) Atmosphäre | | | | | | | | | | |

**Tabelle 2: Physikalisch-chemische Werte der Pulver aus den Beispielen 1 bis 9**

| **Beispiel** | | | **1** | **2** | **3** | **4** | **5** | **6** | **7** | **8** | **9** |
|---|---|---|---|---|---|---|---|---|---|---|---|
| BET-Oberfläche | | m²/g | 30 | 70 | 50 | 53 | 48 | 50 | 52 | 60 | 56 |
| Ø Eisenoxid^{a}) | | Nm | 10-40 | 10-20 | 10-30 | 10-30 | 10-30 | 10-30 | 10-30 | 10-25 | 10-25 |
| Siliciumdioxid | | Gew.-% | 29 | 69 | 48 | 48 | 48,5 | 14,6 | 48,5 | 14 | 13 |
| Eisenoxid | | Gew.-%^{b)} | 68,5 | 28 | 49 | 49 | 49 | 82 | 48 | 83 | 83 |
| | Maghemit | % | 26 | 20 | 20 | 51 | 20 | 22 | 21 | 63 | 65 |
| | Magnetit | % | 61 | 75 | 65 | 22 | 70 | 69 | 71 | 30 | 30 |
| | Hämatit | % | 9 | 5 | 10 | 17 | 7 | 9 | 8 | 5 | 5 |
| | beta-Fe2O3 | % | 4 | 0 | 5 | 10 | 3 | 0 | 0 | 2 | 0 |
| Chlorid | | Gew.-% | 1,5 | 1,9 | 2,0 | 3,0 | 1,93 | 1,54 | 1,5 | 2,0 | 2,0 |
| Manganoxid | | Gew.-%^{c)} | 0,6 | 0,1 | 0,8 | 0,6 | 0,67 | 1,8 | 2,0 | 0,4 | 2,0 |
| Sättigungsmagnetisierung | | Am²/kg | 51,3 | 20,7 | 43,6 | 28,6 | 44,9 | 56,8 | 48,6 | 58,5 | 57,0 |
| Sättigungsmagnetisierung/ Fe₂O₃ | | Am²/ kg Fe₂O₃ | 74,9 | 73,9 | 89,0 | 58,4 | 91,6 | 69,3 | 101,3 | 92,9 | 68,7 |
| Curie-Temperatur | | °C | 613 | 596 | 610 | 601 | 640 | 630 | 613 | 605 | 613 |

| | | | | | | | | | | | |
|---|---|---|---|---|---|---|---|---|---|---|---|
| a) Ø = mittlerer Partikeldurchmesser Eisenoxid; b) als Fe₂O₃; c) als MnO₂; | | | | | | | | | | | |

**Tabelle 3A: Einsatzstoffe für Kautschukmischung**

| **Beispiel** | | **12A** | **12B** |
|---|---|---|---|
| **Stufe 1** | | | |
| EPDM Keltan® 8340 A | phr^{(§)} | 60 | 60 |
| EPDM Keltan® 578 | phr | 40 | 40 |
| Ruß Corax® N 550 | phr | 40 | 40 |
| Ruß Corax® N 990 | phr | 80 | 80 |
| ZnO RS RAL 844 C | phr | 3 | 3 |
| Edenor ST1 GS | phr | 1,5 | 1,5 |
| Sunpar 150 | phr | 60 | 60 |
| Pulver aus Beispiel 6 | phr | 5,85 | 14,55 |
| | Gew.-%⁽*⁾ | 1,98 | 4,78 |

| **Stufe 2** | | | |
|---|---|---|---|
| Summe Stufe 1 | phr | 290,35 | 299,05 |
| Rhenogran® TMTD-80 | phr | 1,25 | 1,25 |
| Rhenogran S-80 | phr | 0,38 | 0,38 |
| Rhenogran® ZDMC-80 | phr | 1,88 | 1,88 |
| Rhenogran® ZDBC-80 | phr | 1,88 | 1,88 |

| | | | |
|---|---|---|---|
| Keltan®: DSM; Corax®: Degussa; Edenor: Caldic Deutschland; Sunpar: Sun Oil Company; Rhenogran®: Rheinchemie; (§)phr: parts per hundred rubber; (*)bezogen auf die gesamte, beschleunigte Kautschukmischung | | | |

**Tabelle 3B: Herstellung der Kautschukmischungen**

| **Stufe 1** | |
|---|---|
| Mischaggregat | Brabender 350S |
| Drehzahl | 80 / min |
| Stempeldruck | 5 bar |
| Leervolumen | 0,39 Liter |
| Füllgrad | 0,68 |
| Durchflusstemperatur | 80°C |

| **Mischvorgang** | |
|---|---|
| 0min - 1min | alle Komponenten der 1. Stufe |
| 1min | Säubern |
| 1min - 3,5min | mischen |
| 3,5min | Ausfahren |
| Batch Temperatur | 135°C - 145°C |
| Lagerung | 4 Stunden bei Raumtemperatur |
| | |

| **Stufe 2** | |
|---|---|
| Mischaggregat | Brabender 350S |
| Drehzahl | 50 / min |
| Stempeldruck | 5 bar |
| Leervolumen | 0,39 Liter |
| Füllgrad | 0,66 |
| Durchflusstemperatur | 50°C |

| **Mischvorgang** | |
|---|---|
| 0min | Batch der 1. Stufe, Beschleuniger und Vernetzungschemikalien zugeben |
| 0min - 2,5min 2,5min | Mischen ausfahren und auf Labormischwalzwerk Fell bilden: |
| | Homogenisieren: |
| | 3* links, 3* rechts einschneiden und 8 * bei engem Walzenspalt (1mm) und 3* bei weitem Walzenspalt (3,5mm) stürzen Fell ausziehen |
| Batch Temperatur | 95°C - 105°C |

## Patentansprüche

1. Silicium-Eisen-Mischoxidpulver mit magnetischen Eigenschaften in Form aggregierter Primärpartikel, wobei
a) TEM-Aufnahmen das Vorliegen von Primärpartikeln aus räumlich voneinander getrennten Bereichen von Siliciumdioxid und Eisenoxid zeigen und der mittlere Partikeldurchmesser des Eisenoxides 2 bis 100 nm ist und
b) der Anteil an
- Silicium, gerechnet als SiO₂, 5 bis 65 Gew.-%
- Eisen, gerechnet als Fe₂O₃, 30 bis 90 Gew.-%
- und der Anteil an Silicium und Eisen, jeweils als oben genannte Oxide gerechnet, mindestens 95 Gew.-% beträgt
c) der Anteil an Chlorid 0,2 bis 3 Gew.-% beträgt, **dadurch gekennzeichnet, dass**
d) das Silicium-Eisen-Mischoxidpulver wenigstens 0,005 bis 2 Gew.-% einer Dotierkomponente aus der Gruppe bestehend aus den Oxiden von Mangan, Cobalt, Chrom, Europium, Yttrium, Samarium, Nickel und Gadolinium. enthält.

2. Silicium-Eisen-Mischoxidpulver nach Anspruch 1, **dadurch gekennzeichnet, dass** der Anteil an Silicium, gerechnet als SiO₂, 50 ± 10 Gew.-% oder 20 ± 10 Gew.-% ist.

3. Silicium-Eisen-Mischoxidpulver nach den Ansprüchen 1 oder 2, **dadurch gekennzeichnet, dass** der Anteil an Eisen, gerechnet als Fe₂O₃, 50 ± 10 Gew.-% oder 80 ± 10 Gew.-% ist.

4. Silicium-Eisen-Mischoxidpulver nach den Ansprüchen 1 bis 3, **dadurch gekennzeichnet, dass** der Anteil an Chlorid 0,5 bis 2,5 Gew.-% beträgt.

5. Silicium-Eisen-Mischoxidpulver nach den Ansprüchen 1 bis 4, **dadurch gekennzeichnet, dass** die Primärpartikel eine Hülle aus Siliciumdioxid mit einer Dicke von 1 bis 15 nm aufweisen.

6. Silicium-Eisen-Mischoxidpulver nach den Ansprüchen 1 bis 5, **dadurch gekennzeichnet, dass** das Eisenoxid als Hauptbestandteil Magnetit und/oder Maghemit umfasst.

7. Silicium-Eisen-Mischoxidpulver nach Anspruch 6, **dadurch gekennzeichnet, dass** der Anteil von Magnetit und/oder Maghemit, bezogen auf die Eisenoxide, mindestens 80% ist.

8. Silicium-Eisen-Mischoxidpulver nach den Ansprüchen **6** oder 7, **dadurch gekennzeichnet, dass** das Gewichtsverhältnis Maghemit/Magnetit 0,3:1 bis 100:1 ist.

9. Silicium-Eisen-Mischoxidpulver nach den Ansprüchen 1 bis 8, **dadurch gekennzeichnet, dass** seine BET-Oberfläche 40 bis 70 m²/g ist.

10. Silicium-Eisen-Mischoxidpulver nach den Ansprüchen 1 bis 9, **dadurch gekennzeichnet, dass** die Partikel mit Poly(meth)acrylaten umhüllt sind.

11. Silicium-Eisen-Mischoxidpulver nach den Ansprüchen 1 bis 10 , **dadurch gekennzeichnet, dass** es eine Sättigungsmagnetisierung von 40 bis 120 Am²/kg Fe₂O₃ aufweist.

12. Silicium-Eisen-Mischoxidpulver nach Anspruch 1, **dadurch gekennzeichnet, dass** es die folgenden Merkmale aufweist:
a) BET-Oberfläche 50 ± 5 m²/g
b) Anteil an
- Silicium, gerechnet als SiO₂, 50 ± 5 Gew.-%
- Eisen, gerechnet als Fe₂O₃, 45 ± 5 Gew.-%
- Chlorid 1,5 ± 0,5 Gew.-%
- Mangan, gerechnet als MnO, 0,5 ± 0,3 Gew.-%, wobei sich die Summe der Oxide zu 100% addiert,
c) mittlerer Durchmesser des Eisenoxides 10-30 nm
d) Anteil (Magnetit + Maghemit), bezogen auf Eisenoxid, 90 ± 10 Gew.-%.

13. Silicium-Eisen-Mischoxidpulver nach Anspruch 1, **dadurch gekennzeichnet, dass** es die folgenden Merkmale aufweist:
a) BET-Oberfläche 50 ± 10 m²/g
b) Anteil an
- Silicium, gerechnet als SiO₂, 10 ± 5 Gew.-%
- Eisen, gerechnet als Fe₂O₃, 85 ± 5 Gew.-%
- Chlorid 1,0 ± 0,2 Gew.-%
- Mangan, gerechnet als MnO, 1,8 ± 0,2 Gew.-%
c) mittlerer Durchmesser des Eisenoxides 10 - 30 nm
d) Anteil (Magnetit + Maghemit), bezogen auf Eisenoxid, 90 ± 10 Gew.-%.

14. Verfahren zur Herstellung des Silicium-Eisen-Mischoxidpulver gemäß den Ansprüchen 1 bis 13, **dadurch gekennzeichnet, dass** man
a) 5 bis 65 Gew.-% ein oder mehrere dampfförmige Halogensiliciumverbindungen, gerechnet als SiO₂,
b) 30 bis 90 Gew.-% Eisenchlorid, gerechnet als Fe₂O₃, in Form einer Lösung und
c) 0,005 bis 2 Gew.-% einer oder mehrerer Dotierverbindungen, gerechnet als Oxid,
d) getrennt der Hochtemperaturzone eines Reaktors zuführt,
e) in der Hochtemperaturzone bei Temperaturen von 700 bis 2500°C mit einem Überschuss an Sauerstoff oder einem sauerstoffhaltigen Gas zur Reaktion bringt,
f) und in einer der Hochtemperaturzone nachfolgenden zweiten Zone des Reaktors, dem Reaktionsgemisch, an einer oder mehreren Stellen, reduzierende Gase in einer Menge zumischt, dass insgesamt in dieser zweiten Zone eine reduzierende Atmosphäre entsteht und die Temperatur des Reaktionsgemisches auf 500°C bis 150°C reduziert wird,
g) den erhaltenen Feststoff in einer weiteren, dritten Zone, in der ebenfalls noch eine reduzierende Atmosphäre vorliegt, von gasförmigen Stoffen abtrennt und
h) gegebenenfalls den gasförmigen Stoffen soviel Luft zumischt, dass das Abgas keine reduzierende Atmosphäre ergibt.

15. 17. Verfahren nach Anspruch 14 , **dadurch gekennzeichnet, dass** die Temperatur aus einer Flamme resultiert, die durch Zündung eines Gemisches, welches ein oder mehrere Brenngase und ein sauerstoffenthaltendes Gas enthält erzeugt wird und die in den Reaktionsraum hinein brennt.

16. Verfahren nach den Ansprüchen 14 oder 15, **dadurch gekennzeichnet, dass** als reduzierende Gase Formiergas, Kohlenmonoxid, Wasserstoff, Ammoniak oder Mischungen dieser Gase eingesetzt werden.

17. Verfahren nach den Ansprüchen 14 bis 16, **dadurch gekennzeichnet, dass** die Verweilzeit in der ersten Zone zwischen 0,8 und 1,5 Sekunden beträgt.

18. Verfahren nach den Ansprüchen 14 bis 17, **dadurch gekennzeichnet, dass** die Summe der Verweilzeit in der zweiten und dritten Zone zwischen 15 Sekunden und 15 Minuten beträgt.

19. Verfahren nach den Ansprüchen 14 bis 18, **dadurch gekennzeichnet, dass** man in die zweite Reaktorzone zusätzlich Wasserdampf einbringt.

20. Verfahren nach den Ansprüchen 14 bis 19, **dadurch gekennzeichnet, dass** man als Eisenchlorid Eisen(II)chlorid einsetzt.

21. Verfahren nach den Ansprüchen 14 bis 20, **dadurch gekennzeichnet, dass** man als Halogensiliciumverbindung Siliciumtetrachlorid einsetzt.

22. Verfahren zur Herstellung des Silicium-Eisen-Mischoxidpulver gemäß den Ansprüchen 1 bis 13, **dadurch gekennzeichnet, dass** man
a) 5 bis 65 Gew.-% ein oder mehrere dampfförmige Halogensiliciumverbindungen, gerechnet als SiO₂,
b) 30 bis 90 Gew.-% Eisenchlorid, gerechnet als Fe₂O₃, in Form einer Lösung und
c) 0,005 bis 2 Gew.-% einer oder mehrerer Dotierverbindungen, gerechnet als Oxid,
d) getrennt der Hochtemperaturzone eines Reaktors zuführt,
e) in der Hochtemperaturzone bei Temperaturen von 700 bis 2500°C in einer Flamme, die durch die Zündung eines Gemisches, welches ein oder mehrere Brenngase und ein sauerstoffenthaltendes Gas enthält, erzeugt wird und die in den Reaktionsraum hinein brennt und bei der Sauerstoff im Unterschuss eingesetzt wird, zur Reaktion bringt,
f) in einer der Hochtemperaturzone nachfolgenden zweiten Zone des Reaktors, dem Reaktionsgemisch, an einer oder mehreren Stellen Luft oder Luft und Wasserdampf in einer Menge zumischt, dass insgesamt in dieser zweiten Zone eine
- reduzierende Atmosphäre oder
- oxidierende Atmosphäre entsteht und die Temperatur auf 500°C bis 150°C reduziert wird und
g) den erhaltenen Feststoff in einer weiteren, dritten Zone von gasförmigen Stoffen der gleichen Atmosphäre wie sie in der zweiten Zone vorliegt, abtrennt, und
h) gegebenenfalls den gasförmigen Stoffen soviel Luft zumischt, dass das Abgas keine reduzierende Atmosphäre ergibt.

23. Verwendung des Silicium-Eisen-Mischoxidpulvers gemäß den Ansprüchen 1 bis 13 zur Herstellung von Dispersionen.

24. Verwendung des Silicium-Eisen-Mischoxidpulvers gemäß den Ansprüchen 1 bis 13 als Bestandteil von Kautschukmischungen.

25. Verwendung des Silicium-Eisen-Mischoxidpulvers gemäß den Ansprüchen 1 bis 13 als Bestandteil von Polymerzubereitungen.

26. Verwendung des Silicium-Eisen-Mischoxidpulvers gemäß den Ansprüchen 1 bis 13 als Bestandteil von Klebstoffzusammensetzungen.

27. Verwendung des Silicium-Eisen-Mischoxidpulvers gemäß den Ansprüchen 1 bis 13 als Bestandteil von durch Schweißen im elektromagnetischen Wechselfeld erhältlichen Kunststoffverbundformkörpern.

## Claims

1. Silicon-iron mixed oxide powder having magnetic properties in the form of aggregated primary particles,
a) for which TEM images show the presence of primary particles composed of spatially separate regions of silicon dioxide and iron oxide and the mean particle diameter of the iron oxide is 2 to 100 nm and
b) in which the proportion of
- silicon, calculated as SiO₂, is 5 to 65% by weight
- iron, calculated as Fe₂O₃, is 30 to 90% by weight
- and the proportion of silicon and iron, each calculated as abovementioned oxides, is at least 95% by weight
c) in which the proportion of chloride is 0.2 to 3% by weight,
**characterized in that**
d) the silicon-iron mixed oxide powder comprises at least 0.005 to 2% by weight of a doping component from the group consisting of the oxides of manganese, cobalt, chromium, europium, yttrium, samarium, nickel and gadolinium.

2. Silicon-iron mixed oxide powder according to Claim 1, **characterized in that** the proportion of silicon, calculated as SiO₂, is 50 ± 10% by weight or 20 ± 10% by weight.

3. Silicon-iron mixed oxide powder according to Claims 1 and 2, **characterized in that** the proportion of iron, calculated as Fe₂O₃, is 50 ± 10% by weight or 80 ± 10% by weight.

4. Silicon-iron mixed oxide powder according to Claims 1 to 3, **characterized in that** the proportion of chloride is 0.5 to 2.5% by weight.

5. Silicon-iron mixed oxide powder according to Claims 1 to 4, **characterized in that** the primary particles have an envelope of silicon dioxide having a thickness of 1 to 15 nm.

6. Silicon-iron mixed oxide powder according to Claims 1 to 5, **characterized in that** the iron oxide comprises, as the main constituent, magnetite and/or maghemite.

7. Silicon-iron mixed oxide powder according to Claim 6, **characterized in that** the proportion of magnetite and/or maghemite, based on the iron oxides, is at least 80%.

8. Silicon-iron mixed oxide powder according to Claims 6 and 7, **characterized in that** the maghemite/magnetite weight ratio is 0.3:1 to 100:1.

9. Silicon-iron mixed oxide powder according to Claims 1 to 8, **characterized in that** its BET surface area is 40 to 70 m²/g.

10. Silicon-iron mixed oxide powder according to Claims 1 to 9, **characterized in that** the particles are enveloped with poly(meth)acrylates.

11. Silicon-iron mixed oxide powder according to Claims 1 to 10, **characterized in that** it has a saturation magnetization of 40 to 120 Am²/kg of Fe₂O₃.

12. Silicon-iron mixed oxide powder according to Claim 1, **characterized in that** it has the following features:
a) BET surface area 50 ± 5 m²/g
b) proportion of
- silicon, calculated as SiO₂, 50 ± 5% by weight
- iron, calculated as Fe₂O₃, 45 ± 5% by weight
- chloride 1.5 ± 0.5% by weight
- manganese, calculated as MnO, 0.5 ± 0.3% by weight,
where the sum of the oxides adds up to 100%,
c) mean diameter of the iron oxide 10-30 nm
d) proportion of (magnetite + maghemite), based on iron oxide, 90 ± 10% by weight.

13. Silicon-iron mixed oxide powder according to Claim 1, **characterized in that** it has the following features:
a) BET surface area 50 ± 10 m²/g
b) proportion of
- silicon, calculated as SiO₂, 10 ± 5% by weight
- iron, calculated as Fe₂O₃, 85 ± 5% by weight
- chloride 1.0 ± 0.2% by weight
- manganese, calculated as MnO, 1.8 ± 0.2% by weight,
c) mean diameter of the iron oxide 10-30 nm
d) proportion of (magnetite + maghemite), based on iron oxide, 90 ± 10% by weight.

14. Process for preparing the silicon-iron mixed oxide powder according to Claims 1 to 13, **characterized in that**
a) 5 to 65% by weight of one or more vaporous halosilicon compounds, calculated as SiO₂,
b) 30 to 90% by weight of iron chloride, calculated as Fe₂O₃, in the form of a solution and
c) 0.005 to 2% by weight of one or more doping compounds, calculated as oxide,
d) are fed separately to the high-temperature zone of a reactor,
e) are reacted in the high-temperature zone at temperatures of 700 to 2500°C with an excess of oxygen or an oxygenous gas,
f) and, in a second zone of the reactor downstream of the high-temperature zone, reducing gases are added to the reaction mixture at one or more points in an amount such as to give rise to a reducing atmosphere overall in this second zone, and the temperature of the reaction mixture is reduced to 500°C to 150°C,
g) the resulting solid is separated from gaseous substances in a further, third zone in which a reducing atmosphere is likewise still present, and
h) optionally, sufficient air is added to the gaseous substances that the offgas does not give rise to a reducing atmosphere.

15. Process according to Claim 14, **characterized in that** the temperature results from a flame which is generated by igniting a mixture which comprises one or more combustion gases and an oxygen-containing gas and which burns into the reaction chamber.

16. Process according to Claims 14 or 15, **characterized in that** the reducing gases used are forming gas, carbon monoxide, hydrogen, ammonia or mixtures of these gases.

17. Process according to Claims 14 to 16, **characterized in that** the residence time in the first zone is between 0.8 and 1.5 seconds.

18. Process according to Claims 14 to 17, **characterized in that** the sum of the residence time in the second and third zone is between 15 seconds and 15 minutes.

19. Process according to Claims 14 to 18, **characterized in that** steam is additionally introduced into the second reactor zone.

20. Process according to Claims 14 to 19, **characterized in that** the iron chloride used is iron(II) chloride.

21. Process according to Claims 14 to 20, **characterized in that** the halosilicon compound used is silicon tetrachloride.

22. Process for preparing the silicon-iron mixed oxide powder according to Claims 1 to 13, **characterized in that**
a) 5 to 65% by weight of one or more vaporous halosilicon compounds, calculated as SiO₂,
b) 30 to 90% by weight of iron chloride, calculated as Fe₂O₃, in the form of a solution and
c) 0.005 to 2% by weight of one or more doping compounds, calculated as oxide,
d) are fed separately to the high-temperature zone of a reactor,
e) are reacted in the high-temperature zone at temperatures of 700 to 2500°C in a flame which is generated by the ignition of a mixture which comprises one or more combustion gases and an oxygen-containing gas and which burns into the reaction chamber, and in which oxygen is used in deficiency,
f) in a second zone of the reactor downstream of the high-temperature zone, air or air and steam are added to the reaction mixture at one or more points in an amount such as to give rise to, overall in this second zone a
- reducing atmosphere or
- oxidizing atmosphere and
the temperature is reduced to 500°C to 150°C and
g) the resulting solid, in a further, third zone, is removed from gaseous substances of the same atmosphere as are present in the second zone, and
h) optionally, sufficient air is added to the gaseous substances that the offgas does not give rise to a reducing atmosphere.

23. Use of the silicon-iron mixed oxide powder according to Claims 1 to 13 for producing dispersions.

24. Use of the silicon-iron mixed oxide powder according to Claims 1 to 13 as a constituent of rubber mixtures.

25. Use of the silicon-iron mixed oxide powder according to Claims 1 to 13 as a constituent of polymer formulations.

26. Use of the silicon-iron mixed oxide powder according to Claims 1 to 13 as a constituent of adhesive compositions.

27. Use of the silicon-iron mixed oxide powder according to Claims 1 to 13 as a constituent of plastic composite mouldings obtainable by welding in an electromagnetic alternating field.

## Revendications

1. Poudre d'oxyde mixte silicium-fer à propriétés magnétiques sous la forme de particules primaires agrégées,
a) les images MET montrant la présence de particules primaires de dioxyde de silicium et d'oxyde de fer dans des zones séparées les unes des autres dans l'espace, et le diamètre de particule moyen de l'oxyde de fer étant de 2 à 100 nm, et
b) la proportion de
- silicium, calculée sous la forme de SiO₂, étant de 5 à 65 % en poids,
- fer, calculée sous la forme de Fe₂O₃, étant de 30 à 90 % en poids
- et la proportion de silicium et de fer, à chaque fois calculée sous la forme des oxydes susmentionnés, étant d'au moins 95 % en poids,
c) la proportion de chlorure étant de 0,2 à 3 % en poids,
**caractérisée en ce que**
d) la poudre d'oxyde mixte silicium-fer contient au moins 0,005 à 2 % en poids d'un composant dopant du groupe constitué par les oxydes de manganèse, cobalt, chrome, europium, yttrium, samarium, nickel et gadolinium.

2. Poudre d'oxyde mixte silicium-fer selon la revendication 1, **caractérisée en ce que** la proportion de silicium, calculée sous la forme de SiO₂, est de 50 ± 10 % en poids ou de 20 ± 10 % en poids.

3. Poudre d'oxyde mixte silicium-fer selon les revendications 1 ou 2, **caractérisée en ce que** la proportion de fer, calculée sous la forme de Fe₂O₃, est de 50 ± 10 % en poids ou de 80 ± 10 % en poids.

4. Poudre d'oxyde mixte silicium-fer selon les revendications 1 à 3 **caractérisée en ce que** la proportion de chlorure est de 0,5 à 2,5 % en poids.

5. Poudre d'oxyde mixte silicium-fer selon les revendications 1 à 4, **caractérisée en ce que** les particules primaires comprennent une enveloppe de dioxyde de silicium ayant une épaisseur de 1 à 15 nm.

6. Poudre d'oxyde mixte silicium-fer selon les revendications 1 à 5, **caractérisée en ce que** l'oxyde de fer comprend de la magnétite et/ou de la maghémite en tant que constituant principal.

7. Poudre d'oxyde mixte silicium-fer selon la revendication 6, **caractérisée en ce que** la proportion de magnétite et/ou de maghémite, par rapport aux oxydes de fer, est d'au moins 80 %.

8. Poudre d'oxyde mixte silicium-fer selon les revendications 6 ou 7, **caractérisée en ce que** le rapport en poids maghémite/magnétite est de 0,3:1 à 100:1.

9. Poudre d'oxyde mixte silicium-fer selon les revendications 1 à 8, **caractérisée en ce que** sa surface BET est de 40 à 70 m²/g.

10. Poudre d'oxyde mixte silicium-fer selon les revendications 1 à 9, **caractérisée en ce que** les particules sont enveloppées avec des poly(méth)acrylates.

11. Poudre d'oxyde mixte silicium-fer selon les revendications 1 à 10, **caractérisée en ce qu'**elle présente une magnétisation de saturation de 40 à 120 Am²/kg de Fe₂O₃.

12. Poudre d'oxyde mixte silicium-fer selon la revendication 1, **caractérisée en ce qu'**elle présente les caractéristiques suivantes :
a) une surface BET de 50 ± 5 m²/g,
b) une proportion de
- silicium, calculée sous la forme de SiO₂, de 50 ± 5 % en poids,
- fer, calculée sous la forme de Fe₂O₃, de 45 ± 5 % en poids,
- chlorure de 1,5 ± 0,5 % en poids,
- manganèse, calculée sous la forme de MnO, de 0,5 ± 0,3 % en poids,
la somme des oxydes étant de 100 %,
c) un diamètre moyen de l'oxyde de fer de 10 à 30 nm,
d) une proportion de (magnétite + maghémite), par rapport à l'oxyde de fer, de 90 ± 10 % en poids.

13. Poudre d'oxyde mixte silicium-fer selon la revendication 1, **caractérisée en ce qu'**elle présente les caractéristiques suivantes :
a) une surface BET de 50 ± 10 m²/g,
b) une proportion de
- silicium, calculée sous la forme de SiO₂, de 10 ± 5 % en poids,
- fer, calculée sous la forme de Fe₂O₃, de 85 ± 5 % en poids,
- chlorure de 1,0 ± 0,2 % en poids,
- manganèse, calculée sous la forme de MnO, de 1,8 ± 0,2 % en poids,
c) un diamètre moyen de l'oxyde de fer de 10 à 30 nm,
d) une proportion de (magnétite + maghémite), par rapport à l'oxyde de fer, de 90 ± 10 % en poids.

14. Procédé de fabrication de la poudre d'oxyde mixte silicium-fer selon les revendications 1 à 13, **caractérisé en ce que**
a) 5 à 65 % en poids d'un ou de plusieurs composés halogène-silicium gazeux, calculés sous la forme de SiO₂,
b) 30 à 90 % en poids de chlorure de fer, calculé sous la forme de Fe₂O₃, sous la forme d'une solution et
c) 0,005 à 2 % en poids d'un ou de plusieurs composés dopants, calculés sous la forme d'un oxyde,
d) sont introduits séparément dans la zone haute température d'un réacteur,
e) sont mis en réaction dans la zone haute température à des températures de 700 à 2 500 °C avec un excès d'oxygène ou d'un gaz contenant de l'oxygène,
f) et des gaz réducteurs sont ajoutés au mélange réactionnel à un ou plusieurs emplacements dans une deuxième zone du réacteur ultérieure à la zone haute température en une quantité telle qu'une atmosphère réductrice se forme au total dans cette deuxième zone et la température du mélange réactionnel est réduite à une température de 500 °C à 150 °C,
g) le solide obtenu est séparé des substances gazeuses dans une troisième zone supplémentaire, dans laquelle une atmosphère réductrice est encore présente, et
h) suffisamment d'air est éventuellement ajouté aux substances gazeuses pour que le gaz d'échappement ne produise pas une atmosphère réductrice.

15. Procédé selon la revendication 14, **caractérisé en ce que** la température résulte d'une flamme qui est générée par combustion d'un mélange qui contient un ou plusieurs gaz de combustion et un gaz contenant de l'oxygène et qui est brûlée dans la chambre réactionnelle.

16. Procédé selon les revendications 14 ou 15, **caractérisé en ce que** de l'hydrazote, du monoxyde de carbone, de l'hydrogène, de l'ammoniac ou des mélanges de ces gaz sont utilisés en tant que gaz réducteurs.

17. Procédé selon les revendications 14 à 16, **caractérisé en ce que** le temps de séjour dans la première zone est compris entre 0,8 et 1,5 secondes.

18. Procédé selon les revendications 14 à 17, **caractérisé en ce que** la somme du temps de séjour dans la deuxième et troisième zone est comprise entre 15 secondes et 15 minutes.

19. Procédé selon les revendications 14 à 18, **caractérisé en ce que** de la vapeur d'eau est également introduite dans la deuxième zone du réacteur.

20. Procédé selon les revendications 14 à 19, **caractérisé en ce que** du chlorure de fer (II) est utilisé en tant que chlorure de fer.

21. Procédé selon les revendications 14 à 20, **caractérisé en ce que** du tétrachlorure de silicium est utilisé en tant que composé halogène-silicium.

22. Procédé de fabrication de la poudre d'oxyde mixte silicium-fer selon les revendications 1 à 13, **caractérisé en ce que**
a) 5 à 65 % en poids d'un ou de plusieurs composés halogène-silicium gazeux, calculés sous la forme de SiO₂,
b) 30 à 90 % en poids de chlorure de fer, calculé sous la forme de Fe₂O₃, sous la forme d'une solution et
c) 0,005 à 2 % en poids d'un ou de plusieurs composés dopants, calculé sous la forme d'un oxyde,
d) sont introduits séparément dans la zone haute température d'un réacteur,
e) sont mis en réaction dans la zone haute température à des températures de 700 à 2 500 °C dans une flamme qui est générée par combustion d'un mélange qui contient un ou plusieurs gaz de combustion et un gaz contenant de l'oxygène et qui est brûlée dans la chambre réactionnelle et pour laquelle l'oxygène est utilisé en déficit,
f) de l'air ou de l'air et de la vapeur d'eau sont ajoutés au mélange réactionnel à un ou plusieurs emplacements dans une deuxième zone du réacteur ultérieure à la zone haute température en une quantité telle qu'une
- atmosphère réductrice ou
- une atmosphère oxydante
se forme au total dans cette deuxième zone et la température est réduite à une température de 500 °C à 150 °C, et
g) le solide obtenu est séparé des substances gazeuses dans une troisième zone supplémentaire de la même atmosphère que celle présente dans la deuxième zone, et
h) suffisamment d'air est éventuellement ajouté aux substances gazeuses pour que le gaz d'échappement ne produise pas une atmosphère réductrice.

23. Utilisation de la poudre d'oxyde mixte silicium-fer selon les revendications 1 à 13 pour la fabrication de dispersions.

24. Utilisation de la poudre d'oxyde mixte silicium-fer selon les revendications 1 à 13 en tant que constituant de mélanges de caoutchouc.

25. Utilisation de la poudre d'oxyde mixte silicium-fer selon les revendications 1 à 13 en tant que constituant de préparations de polymère.

26. Utilisation de la poudre d'oxyde mixte silicium-fer selon les revendications 1 à 13 en tant que constituant de compositions adhésives.

27. Utilisation de la poudre d'oxyde mixte silicium-fer selon les revendications 1 à 13 en tant que constituant de corps moulés composites plastiques pouvant être obtenus par soudure dans un champ électromagnétique alternatif.
